# EUROPEAN PATENT SPECIFICATION

(11) **EP 3 202 974 B1**
(45) Date of publication and mention of the grant of the patent: **13.07.2022**
(21) Application number: 15846632.6
(22) Date of filing: 17.09.2015
(51) Int. Cl.: D06N 3/00, D06C 11/00

(54) **NAPPED LEATHER-LIKE SHEET AND METHOD FOR PRODUCING THE SAME**
RAULEDERARTIGE BAHN UND VERFAHREN ZUR HERSTELLUNG DAVON
FEUILLE EN SIMILICUIR GRATTÉ ET SON PROCÉDÉ DE PRODUCTION

(30) Priority: 29.09.2014 JP 2014198746
(43) Date of publication of application: 09.08.2017
(73) Proprietor: Kuraray Co., Ltd., Okayama 710-0801 (JP)
(72) Inventor: FUJISAWA, Michinori, Okayama (JP); HASHIMOTO, Koji, Okayama (JP)
(74) Representative: Vossius & Partner Patentanwälte Rechtsanwälte mbB
(86) International application number: PCT/JP2015/004764
(87) International publication number: WO 2016/051711

(56) References cited:
- EP-A1- 2 292 821
- EP-A1- 2 402 501
- EP-A2- 0 134 635
- WO-A1-2013/129388
- JP-A- H0 760 885
- JP-A- 2002 105 870
- JP-A- 2005 146 446
- JP-A- 2005 146 446
- JP-A- 2006 063 488
- JP-A- 2009 001 945
- JP-A- 2015 224 415

## Description

### [Technical Field]

The present invention relates to a napped leather-like sheet used in applications such as surface materials of clothing, shoes, furniture and the like, and interior materials of vehicles, aircrafts and the like, and a method for producing the same.

### [Background Art]

Conventionally, a napped leather-like sheet, which is artificial leather resembling nubuck or suede, has been known. In general, it is known that nubuck has short naps and a moist tactile impression with a wet or slimy touch, and suede has longer naps and a lower wet touch than nubuck.

As a napped leather-like sheet, for example, PTL 1 below discloses a leather-like sheet including a projecting and recessed pattern formed on a surface of a substrate composed of a non-woven fabric made of an ultrafine filament bundle and an elastic polymer applied in the non-woven fabric, wherein the projecting portions of the projecting and recessed pattern include napped fibers of 0.5 decitex or less, the napped fibers are fixed to the elastic polymer constituting the substrate in the recessed portions, each projecting portion of the projecting and recessed pattern is surrounded by the recessed portion, and an average area of the individual projecting portions is 0.2 to 25 mm². PTL 1 also discloses that such a configuration can provide a leather-like sheet having a natural leather-like, uneven feel on the surface, and a contrast between the recessed portions and the projecting portions because substantially no nap is present in the recessed portions and naps are present in the projecting portions. PTL 2 below discloses a grain-finished nubuck leather-like sheet material including, on a surface thereof, both projecting portions with a grain layer and recessed portions with ultrafine fiber naps, wherein the grain layer of the projecting portion is a composite layer in which ultrafine napped fibers of 0.2 denier or less are fixed with an elastic polymer, and accounts for 5 to 80% of the total surface area of the sheet, and the grain layer is formed such that most of the grains of the projecting portions form a non-continuous layer having an area of 0.05 to 20 mm², and the ultrafine fiber naps of 0.2 denier or less and a nap length 40 to 300 µm are present in the recessed portions. PTL 3 discloses that an entangled filament web is obtained by temporarily fuse-bonding the filaments on the surface in specific state by hot-pressing the surface of the web of microfine fiber-forming filaments immediately after spinning and then needle-punching the web under controlled conditions to fully entangle the filaments and simultaneously fractionating the temporarily fuse-bonded portions.

Conventionally, the above-described napped leather-like sheet has been known in which a projecting and recessed shape is formed on the surface of a napped fiber base material, and the napped fibers are fixed with an elastic polymer such as polyurethane.

### [Citation List]

### [Patent Literatures]

[PTL 1] Japanese Laid-Open Patent Publication No. 2009-001945
[PTL 2] Japanese Laid-Open Patent Publication No. Hei09-067779
[PTL 3] European Patent No. 2402501 A1

### [Summary of Invention]

### [Technical Problem]

In the case where napped fibers are fixed with an elastic polymer, the resulting surface has a coarse tactile impression, so that a tactile impression with a moist and slimy touch of nubuck cannot be sufficiently achieved.

It is an object of the present invention to provide a napped leather-like sheet having a tactile impression close to that of nubuck with a moist and slimy touch, as well as having an excellent durability of unnapped regions with design quality, and to provide a method for producing the same.

### [Solution to Problem]

An aspect of the present invention is directed to a napped leather-like sheet including a fiber base material including a non-woven fabric that is an entangled body of ultrafine fibers of 0.5 dtex or less and an elastic polymer applied to the non-woven fabric, wherein the napped leather-like sheet has a surface including a napped region including the ultrafine fibers that have been napped, and a plurality of unnapped regions including the ultrafine fibers that have been thermally welded and laid down, the unnapped regions being surrounded by the napped region, a total area of the unnapped regions accounts for 5 to 30% of an area of the surface, and Y/X is 0.5 to 1.5, where X represents an average nap length (µm) of the napped ultrafine fibers and Y represents an overall average length (µm) of averages of widths, orthogonal to a longitudinal direction, of the unnapped regions. Such a configuration can achieve a napped leather-like sheet having a tactile impression as that of nubuck with a moist and slimy touch, as well as having an excellent durability of unnapped regions with design quality. The napped region imparts a wet feel to the napped leather-like sheet, and the unnapped regions impart a dry feel thereto. Accordingly, a moist and slimy touch can be more easily achieved when the napped region accounts for a higher ratio. However, when the fibers are not fixed at all, the napped region is likely to wear out (the durability of the napped state is likely to be reduced). On the other hand, in the case where the napped fibers are fixed with an elastic polymer, a coarse tactile impression is likely to remain.

In the napped leather-like sheet according to the present invention, a moist and slimy touch with a low dry feel can be achieved by suppressing the area of the unnapped regions in the surface to 5 to 30%. Further, instead of binding the ultrafine fibers with the elastic polymer in order to fix the ultrafine fibers, the ultrafine fibers are thermally welded and laid down to form unnapped regions, so that a coarse tactile impression is less likely to remain. Furthermore, Y/X is adjusted to be 0.5 to 1.5, where X represents an average nap length of the ultrafine fibers of the napped region and Y represents an overall average length of the averages of the widths, orthogonal to the longitudinal direction, of the unnapped regions. Thereby, the ultrafine fibers of the napped region cover most of the unnapped regions, thus inhibiting a person's finger from directly touching the unnapped regions when the finger sweeps along the napped surface. This can reduce a dry feel that can be felt with the finger. As a result, a napped leather-like sheet having a tactile impression with a moist and slimy touch with a low coarse tactile impression can be obtained.

It is preferable that in the napped leather-like sheet, the elastic polymer is not attached to the napped ultrafine fibers and the thermally welded and laid down ultrafine fibers when the surface is observed with a scanning electron microscope (SEM) at a magnification of 30X, since a tactile impression with a moist and slimy touch with a low coarse tactile impression can be obtained.

It is preferable that the average nap length X is 100 to 400 µm, since the unnapped regions are uniformly covered with naps and the occurrence of pilling can be prevented.

It is preferable that the overall average length (µm) Y is 150 to 500 µm, since this provides well-balanced design quality and tactile impression of the unnapped regions.

It is preferable that the plurality of unnapped regions have an average area of 0.11 to 0.17 mm², since this provides excellent durability of the unnapped regions.

It is preferable that the ultrafine fibers are fibers of an isophthalic acid-modified polyethylene terephthalate having a glass transition temperature of 100 to 120°C, since this allows the ultrafine fibers to be easily thermally welded to form the unnapped regions.

It is also preferable that the napped leather-like sheet has a color fastness to water of grade 4 or higher in a color fastness test in accordance with JIS L 0846, and the ultrafine fibers are dyed with a disperse dye. When the ultrafine fibers dyed with a disperse dye are contained, the dye will be detached from the elastic polymer during the washing step performed after dyeing if the ultrafine fibers of the napped region are fixed with an elastic polymer. This causes a significant color difference between the color of the dyed ultrafine fibers and the color of the elastic polymer, resulting in a color difference between the napped region and the unnapped regions and hence a nonuniform appearance. In the napped leather-like sheet according to the present invention, the napped ultrafine fibers are fixed by being thermally welded, instead of being fixed with an elastic polymer, so that a color difference is less likely to occur between the napped region and the unnapped regions even after the napped leather-like sheet is washed so as to have a color fastness to water of grade 4 or higher after being dyed with the disperse dye.

Another aspect of the present invention is directed to a method for producing a napped leather-like sheet, including the steps of: providing a fiber base material including a non-woven fabric that is an entangled body of ultrafine fibers of 0.5 dtex or less and an elastic polymer applied to the non-woven fabric; napping at least one surface of the fiber base material; dyeing the napped fiber base material with a disperse dye; heat embossing the napped surface by using an embossing mold having a projecting and recessed shape such that unnapped regions that account for 5 to 30% in area and in which the ultrafine fibers have been thermally welded are formed in the napped surface of the dyed fiber base material; further napping the heat-embossed surface; and washing performed before or after any one of the steps after the dyeing, wherein Y/X is adjusted to 0.5 to 1.5, where X represents an average nap length (µm) of the napped ultrafine fibers and Y represents an overall average (µm) of averages of widths, orthogonal to a longitudinal direction, of the unnapped regions.

### [Advantageous Effects of Invention]

According to the present invention, it is possible to provide a napped leather-like sheet having a tactile impression close to that of nubuck with a moist and slimy touch, as well as having an excellent durability of unnapped regions with design quality.

### [Brief Description of Drawing(s)]

[FIG. 1] FIG. 1 is an example of a photograph taken when an upper surface of a napped leather-like sheet according to the present embodiment was observed with an SEM at a magnification of 30X.
[FIG. 2] FIG. 2 is an example of a photograph taken when a cross section, in a thickness direction, of the napped leather-like sheet according to the present embodiment was observed with an SEM at a magnification of 80X.
[FIG. 3] FIG. 3 is an explanatory diagram schematically showing a surface of the napped leather-like sheet that has a napped region R1 and unnapped regions R2.
[FIG. 4] FIG. 4 is an explanatory diagram for illustrating a method for determining an area ratio of the unnapped regions in the surface including the napped region and the unnapped regions and an overall average length Y of the averages of the widths, orthogonal to a longitudinal direction, of the unnapped regions by using the photograph taken when the surface of the napped leather-like sheet was observed with an SEM, shown in FIG. 1.
[FIG. 5] FIG. 5 is an explanatory diagram for illustrating a method for determining an average nap length (µm) X of napped ultrafine fibers by using the photograph taken when a cross section, in the thickness direction, of the napped leather-like sheet was observed with an SEM, shown in FIG. 2.

### [Description of Embodiment]

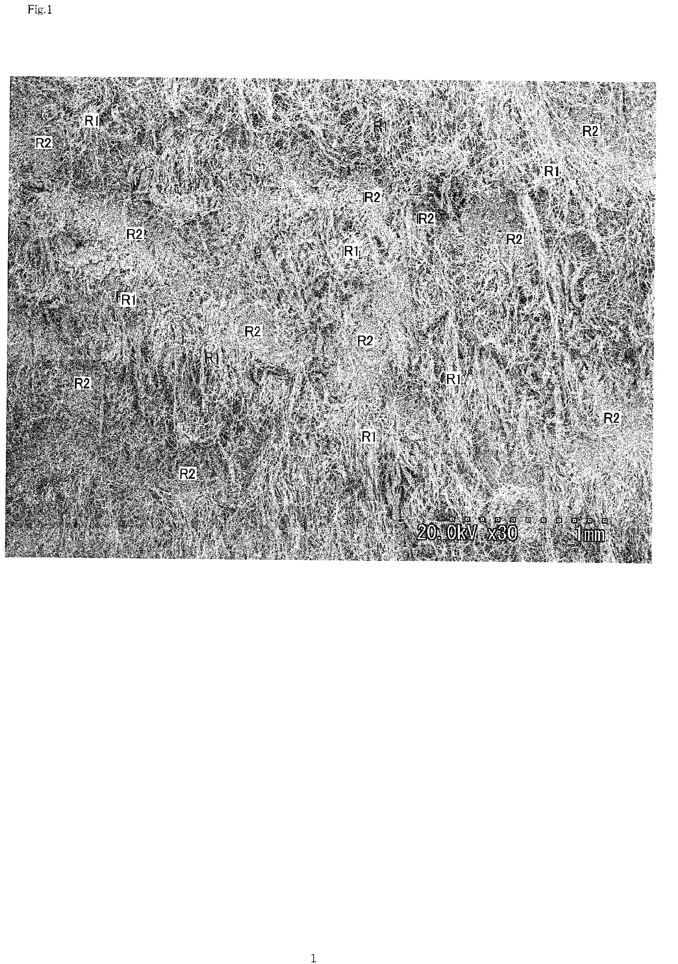

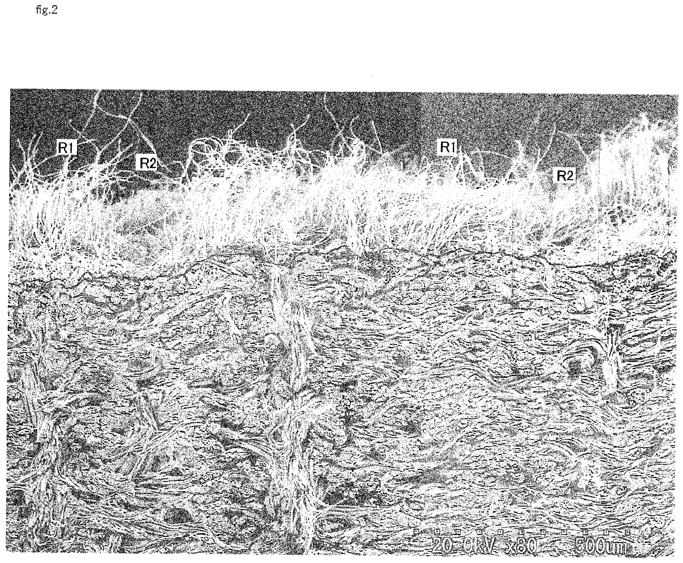

FIG. 1 is an example of a photograph taken when an upper surface of a napped leather-like sheet according to the present embodiment was observed with a scanning electron microscope (SEM). FIG. 2 is an example of a photograph taken when a cross section, in a thickness direction, of the napped leather-like sheet of the present embodiment was observed with an SEM. In FIG. 1, R1 denotes a napped region, and R2 denotes a plurality of unnapped regions, each being surrounded by the napped region R1 and present discontinuously, and including ultrafine fibers that have been thermally welded and laid down.

The napped leather-like sheet of the present embodiment can be obtained, for example, in the following manner. First, a fiber base material including a non-woven fabric that is an entangled body of ultrafine fibers of 0.5 dtex or less and an elastic polymer applied to the non-woven fabric is napped. Then, the napped fiber base material is heat-embossed to thermally weld a part of the napped ultrafine fibers on the surface layer. In this manner, a plurality of unnapped regions R2 including the laid-down ultrafine fibers are formed so as to account for 5 to 30% of the area in the surface. At this time, Y/X is adjusted to be 0.5 to 1.5, where X represents an average nap length of the napped ultrafine fibers, and Y represents an overall average (µm) of the widths, orthogonal to the longitudinal direction, of the unnapped regions.

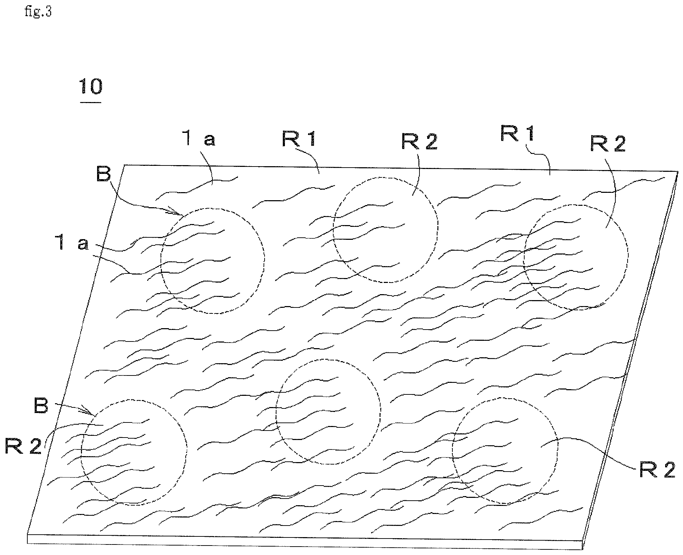

FIG. 3 is an explanatory diagram schematically showing a surface of a napped leather-like sheet 10 that includes a napped region R1 and unnapped regions R2. As shown in FIG. 3, as a result of heat embossing, a slight level difference is formed at a boundary B (the contour of each unnapped region R2) between the napped region R1 and each of the plurality of unnapped regions R2. When the surface of the napped leather-like sheet is swept with a person's finger, the finger senses this level difference. When the average nap length of the napped ultrafine fibers is small relative to the width of the unnapped regions R2, this level difference is likely to be sensed by the finger, and the finger tends to directly touch the surface of the unnapped regions R2 and thus experiences a coarse feel. As will be described below, by forming the plurality of unnapped regions R2 so as to account for 5 to 30% of the area in the surface, and adjusting Y/X to be 0.5 to 1.5, where X represents an average nap length of the napped ultrafine fibers and Y represents an overall average (µm) of the widths, orthogonal to the longitudinal direction, of the unnapped regions, the boundary B between the napped region R1 and each of the plurality of unnapped regions R2, as well as the unnapped regions R2 can be easily covered with the ultrafine fibers of the napped region R1. Consequently, the level difference and a coarse feel are less likely to be sensed, making it possible to obtain a napped leather-like sheet having a tactile impression with a moist and slimy touch.

In the napped leather-like sheet obtained in the present embodiment, the area ratio of the unnapped regions in the surface including the napped region and the unnapped regions is 5 to 30%, preferably 10 to 25%, more preferably 10 to 20%. When the area ratio of the unnapped regions exceeds 30%, a moist and slimy touch is reduced, resulting in a dry and coarse tactile impression. On the other hand, when the area ratio of the unnapped regions is less than 5%, a moist and slimy touch is high, but the durability of the fixation of the unnapped regions is likely to be reduced. When the fixation of the unnapped state is lost, the design quality of the unnapped regions is reduced.

In the napped leather-like sheet according to the present embodiment, Y/X is 0.5 to 1.5, where X represents an average nap length of the napped ultrafine fibers and Y represents an overall average length of the averages of the widths, orthogonal to the longitudinal direction, of the unnapped regions. When Y/X is 0.5 or more, a large part of the surface of the unnapped regions can be easily covered. Accordingly, the surface of the unnapped regions is less likely to be touched directly, and the level difference is also sufficiently covered with the ultrafine fibers and is thus less likely to be sensed. As a result, a coarse tactile impression that is unsmooth is less likely to remain, resulting in a tactile impression with a moist and slimy touch. When Y/X exceeds 1.7, a coarse tactile impression that is unsmooth is likely to remain due to a low moist and slimy touch. On the other hand, when Y/X is less than 0.5, the design quality provided by the unnapped regions is less likely to be achieved as a result of the unnapped regions being covered with the napped fibers.

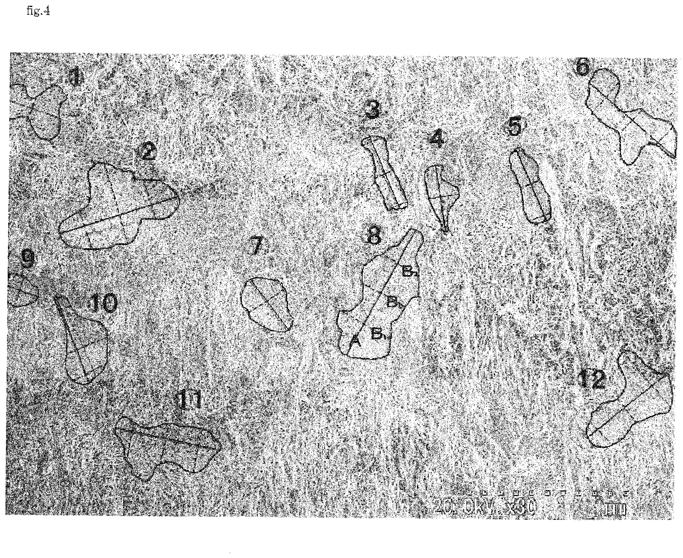

FIG. 4 is an explanatory diagram illustrating a method for determining the area ratio of unnapped regions in a surface including a napped region and unnapped regions and an overall average length Y of the averages of the widths, orthogonal to the longitudinal direction, of the unnapped regions by using the photograph taken when the surface of a napped leather-like sheet was observed with an SEM, shown FIG. 1. FIG. 4 is a photograph taken when the napped fibers of the napped leather-like sheet are oriented to the nap direction.

As shown in FIG. 4, in a 30X SEM photograph of the surface of the napped leather-like sheet in which the napped fibers are oriented in the nap direction, a boundary line (contour of each unnapped region R2) between each of the plurality of unnapped regions R2 and the napped region R1 including the napped ultrafine fibers is drawn. In FIG. 4, the contours of 12 unnapped regions R2 are observed. Then, the napped region and the unnapped regions are separated along the boundary line, and the weight of a photograph piece of each of the regions is measured, and the area ratio of each region can be calculated by calculating the weight ratio of each region.

As shown in FIG. 4, in each unnapped region R2, a line A is drawn in a longitudinal direction, along which the unnapped region is the longest. Then, a line B₀ orthogonal to the center of the line A is drawn, then a plurality of lines Bn (B₁, B₂, B₃, ...) parallel to the line B₀ are drawn at an interval of 200 µm from B₀, and an average value of the lengths B₀ to Bn is determined. Then, an average value of each of 50 different unnapped regions R2 is determined, and an overall average length Y of the averages of the widths, orthogonal to the longitudinal direction, of the unnapped regions can be determined by further averaging the average values.

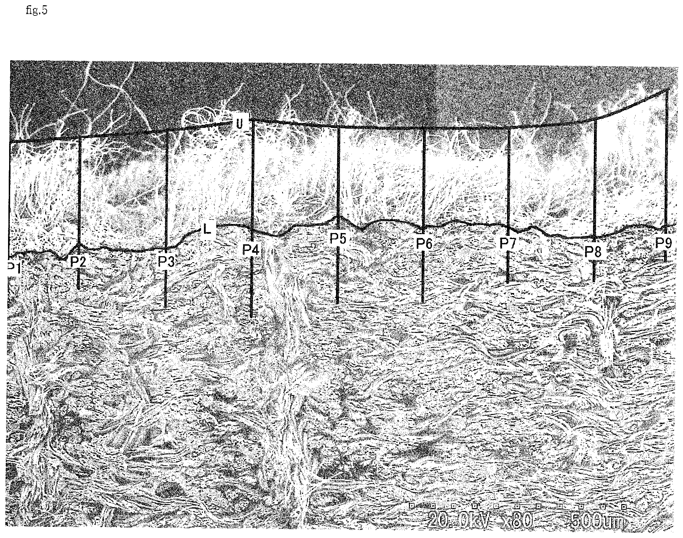

FIG. 5 is an explanatory diagram for illustrating a method for determining an average nap length (µm) X of napped ultrafine fibers by using the photograph taken when a cross section, in the thickness direction, of the napped leather-like sheet was observed with an SEM, shown in FIG. 2. FIG. 5 is a photograph taken when the napped fibers of the napped leather-like sheet are oriented against the nap direction. As shown in FIG. 5, in an 80X SEM photograph of a cross section of the napped leather-like sheet in which the napped fibers are oriented against the nap direction, a line L is drawn on the basal portions of the ultrafine fibers in the non-woven fabric, or in the case where fiber bundles are formed, on the upper boundary of the fiber bundles present. Also, a line U is drawn on the upper boundary of the front-most fibers napped on the observed surface. Then, a plurality of lines Pn (P₁, P₂, P₃, ... P₉) parallel to the thickness direction are drawn at an interval of 200 µm. Then, the lengths of the line segments from L to U on the lines Pn are measured, and the measured lengths are averaged. Then, the lengths of the line segments on the nine different lines Pn are determined, and an average thereof is determined. This measurement is performed at four locations selected evenly across the napped leather-like sheet, and average values are further averaged, and thereby, an average nap length (µm) X of the napped ultrafine fibers can be calculated.

The napped leather-like sheet of the present embodiment is produced by, for example, providing a fiber base material including a non-woven fabric that is an entangled body of ultrafine fibers of 0.5 dtex or less and an elastic polymer applied to the non-woven fabric; napping at least one surface of the fiber base material; heat embossing the napped surface by using an embossing mold having a projecting and recessed shape so as to form, in the napped surface of the fiber base material, unnapped regions that account for 5 to 30% in area and in which the ultrafine fibers are thermally welded; and further napping the heat-embossed surface, wherein Y/X is adjusted to 0.5 to 1.5, where X represents the average nap length of the napped ultrafine fibers and Y represents an overall average length (µm) of the averages of the widths, orthogonal to the longitudinal direction, of the unnapped regions. Hereinafter, the napped leather-like sheet according to the present embodiment will be described in detail, in conjunction with a specific example of the production method thereof.

In the method for producing the napped leather-like sheet of the present embodiment, first, a fiber base material including a non-woven fabric that is an entangled body of ultrafine fibers of 0.5 dtex or less and an elastic polymer is produced. As the non-woven fabric, a fiber-containing non-woven fabric in which ultrafine fibers are thermally welded by heat embossing is used.

It is particularly preferable that the non-woven fabric that is an entangled body of ultrafine fibers is an entangled body of fiber bundles of ultrafine fibers each composed of a plurality of ultrafine fibers bundled together since the fiber structure is densified, allowing the fibers to be easily thermally welded together by hot pressing the non-woven fabric.

The production of the non-woven fabric that is an entangled body of ultrafine fibers includes, for example, (1) a web production step of producing a fiber web composed of ultrafine fiber-generating fibers such as island-in-the-sea (matrix-domain) composite fibers by melt spinning, (2) a web entangling step of entangling a plurality of sheets of the resulting fiber web stacked one on top of each other, to form a web entangled sheet, (3) a heat-moisture shrinking step of heat-moisture shrinking the web entangled sheet, (4) an elastic polymer impregnation step of impregnating the sheet with an elastic polymer such as polyurethane, and (5) an ultrafine fiber formation step of converting the ultrafine fiber-generating fibers in the web entangled sheet to ultrafine single fibers.

Although the present embodiment describes in detail a case where the island-in-the-sea composite fiber is used, it is possible to use an ultrafine fiber-generating fiber other than the island-in-the-sea composite fiber, or to directly spin ultrafine fibers without using any ultrafine fiber-generating fiber. Note that specific examples of the ultrafine fiber-generating fiber other than the island-in-the-sea composite fiber include: a strip/division-type fiber in which a plurality of ultrafine fibers are lightly bonded immediately after spinning, and separated by a mechanical operation, to form a plurality of ultrafine fibers; and a petal-shaped fiber obtained by alternately assembling a plurality of resins in a petal shape in a melt spinning step. Any fibers capable of forming ultrafine fibers may be used without any particular limitation.

### (1) Web production step

In the present step, first, a web made of an island-in-the-sea composite fiber is produced by melt spinning. The island-in-the-sea composite fiber is a fiber that forms fiber bundle-like ultrafine fibers made of the island component by removing the sea component by extraction or decomposition in a later suitable stage.

The web can be produced by, for example, a method in which a filament web formed by using the so-called spunbonding in which the island-in-the-sea composite fiber is spun by melt spinning, and the resulting fiber is collected without cutting, or a method in which staples that have been cut into a given fiber length (e.g., 18 to 110 mm) are collected, to form a staple web. Of these, a filament web is preferable in that the fibers can be densified, and can be easily thermally welded together due to fewer fiber cross sections.

Here, "filaments" refers to fibers other than staples that have been cut into a predetermined length. From the viewpoint of sufficiently increasing the fiber density of ultrafine single fibers, the length of the filaments is preferably 100 mm or more, more preferably 200 mm or more. When the ultrafine single fibers are too short, it tends to be difficult to increase the density of the fibers. Although the upper limit is not particularly limited, for example, when a fiber-entangled body derived from a non-woven fabric produced by spunbonding is contained, the filaments may be continuously spun fibers having a fiber length of several meters, several hundred meters, several kilometers, or more. These fibers may be a mixture of several types of fibers rather than being made of a single type of fibers. In the present embodiment, the production of a filament web will be described in detail as a representative example.

Examples of the thermoplastic resin forming the island component of the island-in-the-sea composite fiber include fibers made of synthetic resins having fiber-forming properties, including: polyester resins such as polyethylene terephthalate (PET), polytrimethylene terephthalate, polybutylene terephthalate, and polyester elastomer; polyamide resins such as polyamide 6, polyamide 66, polyamide 610, aromatic polyamide, and polyamide elastomer; acrylic resins; and olefin resins. These may be used alone or in a combination of two or more.

The glass transition temperature (Tg) of the thermoplastic resin forming the ultrafine fibers is not particularly limited as long as it allows the fibers to be thermally welded, and is, for example, preferably 130°C or less, more preferably 120°C or less, from the view point of ease of welding the fiber surface by softening or melting in the step of welding the non-woven fabric by heat embossing. Specific examples of the thermoplastic resin having a Tg of 130°C or less include a thermoplastic resin containing a modified polyethylene terephthalate. Note that Tg can be determined, for example, by using a dynamic viscoelasticity measurement device (e.g., FT Rheospectoler DDVIV manufactured by Rheology Co. Ltd.) to measure the dynamic viscoelasticity behavior under the conditions of a measurement range of 30 to 250°C, a temperature rising rate of 3°C/min, a distortion of 5 µm/20 mm and a measurement frequency of 10 Hz, with a test strip having a width of 5 mm and a length of 30 mm being fixed between chucks disposed at an interval of 20 mm.

As the modified polyethylene terephthalate, it is preferable to use a modified polyethylene terephthalate containing an asymmetric aromatic carboxylic acid such as isophthalic acid, phthalic acid or 5-sodium sulfoisophthalic acid, and an aliphatic dicarboxylic acid such as adipic acid, at a predetermined ratio as the copolymer components. More specifically, it is particularly preferable to use a modified polyethylene terephthalate containing 2 to 12 mol% of an isophthalic acid unit as a monomer component.

On the other hand, specific examples of the thermoplastic resin forming the sea component include polyvinyl alcohol resins, polyethylene, polypropylene, polystyrene, ethylene-propylene copolymers, ethylene-vinyl acetate copolymers, styrene-ethylene copolymers, and styrene-acrylic copolymers. Among these, polyvinyl alcohol resins, in particular, an ethylene-modified polyvinyl alcohol resin is preferable because it can be easily shrunk in a heat moisture treatment or a hydrothermal treatment.

Preferably, spunbonding is used for spinning of the island-in-the-sea composite fiber and the formation of a filament web. Specifically, using a multicomponent fiber spinning spinneret having multiple nozzle holes arranged in a predetermined pattern, the island-in-the-sea composite fiber is continuously discharged from the individual nozzle holes onto a movable net in the form of a conveyor belt, and is allowed to be piled while being cooled with a high-velocity air stream. With such a method, a filament web is formed. In order to impart shape stability to the filament web formed on the net, the filament web is preferably subjected to temporary welding in which the web is pressed to such a degree that it will not be formed into a film. Specific examples of temporary welding include hot pressing. As hot pressing, it is possible to use, for example, a method in which pressing is performed using a calendar roll by application of a predetermined pressure and a predetermined temperature. The temperature at which hot pressing is performed is preferably lower than the melting points of the ingredients constituting the sea component of the island-in-the-sea composite fiber by at least 10°C, since the fiber surfaces can be suitably welded together while maintaining the fiber configuration, without making the fibers into a film.

The basis weight of the filament web after being subjected to temporary welding is preferably in the range of 20 to 60 g/m². With a basis weight in the range of 20 to 60 g/m², a good shape retainability can be maintained in the next superposing step.

### (2) Web entangling step

Next, about 4 to 100 sheets of the resulting web stacked on top another are entangled, to form a web entangled sheet. The web entangled sheet is formed by performing an entangling treatment on the web by using a known non-woven fabric production method such as needle punching or water jetting. In the following, an entangling treatment by needle punching will be described in detail.

First, a silicone-based oil solution or a mineral oil-based oil solution such as an oil solution for preventing the needle from breaking, an antistatic oil solution, or an entangling enhancing oil solution is applied to the web. Thereafter, an entangling treatment in which the fibers are three-dimensionally entangled by needle punching is performed. By performing needle punching, it is possible to obtain a web entangled sheet that has a high fiber density and is less likely to cause falling out of fibers. The basis weight of the web entangled sheet is selected as appropriate according to the desired thickness. Specifically, it is preferably in the range of, for example, 500 to 2000 g/m² in terms of excellent handleability.

### (3) Heat shrinking treatment step

Next, the web entangled sheet is heat-shrunk to increase the fiber density and the degree of entanglement of the web entangled sheet. Specific examples of the heat shrinking treatment include a method involving continuously bringing the web entangled sheet into contact with water vapor, and a method involving applying water to the non-woven fabric, and subsequently heating the water applied to the non-woven fabric by using hot air or electromagnetic waves such as infrared rays. For the purpose of, for example, further densifying the non-woven fabric that has been densified by the heat-shrinking treatment, as well as fixing the shape of the non-woven fabric and smoothing the surface thereof, additional hot pressing may be performed as needed so as to further increase the fiber density.

The change in the basis weight of the web entangled sheet during the heat-shrinking treatment step is preferably 1.1 times (mass ratio) or more the basis weight before the shrinking treatment, more preferably 1.3 times or more and 2 times or less, more preferably 1.6 times or less.

### (4) Elastic polymer impregnation step

For the purpose of enhancing the shape stability of the web entangled sheet, it is preferable to impregnate an elastic polymer into the web entangled sheet that has been subjected to the shrinking treatment, either before or after performing an ultrafine fiber generating treatment on the web entangled sheet.

Specific examples of the elastic polymer include polyurethanes; acrylic elastic materials; polyamide elastic materials such as polyamide elastomers; polyester elastic materials such as polyester elastomers; polystyrene elastic materials; and polyolefin elastic materials. Among these, polyurethanes are particularly preferable in terms of excellent flexibility and fullness.

The content ratio of the elastic polymer is preferably 5 to 20 mass%, more preferably 10 to 15 mass%, relative to the total amount of the non-woven fabric formed and the elastic polymer. When the content ratio of the elastic polymer is less than 5 mass%, a sufficient shape stability tends not to be provided. When the content ratio exceeds 20 mass%, the elastic polymer tends to be more likely to be exposed on the surface during heat embossing, which will be described later. Then, when the elastic polymer is exposed on the surface, a coarse tactile impression is likely to remain, and in the case where the fiber base material has been dyed, a significant color difference tends to occur between the color of the ultrafine fibers and the color of the elastic polymer.

As the method for impregnating the elastic polymer into the web entangled sheet, it is preferable to use, for example, for polyurethane, dip-nipping in which a treatment of dipping the web entangled sheet in a bath filled with an aqueous emulsion of polyurethane, and thereafter nipping the web entangled sheet by using a press roll or the like to achieve a predetermined impregnated state is performed once or a plurality of times. As another method, it is possible to use bar coating, knife coating, roll coating, comma coating, spray coating, or the like.

As the polyurethane, it is preferable to use a known polyurethane obtained by polymerizing, by emulsion polymerization, melt polymerization, bulk-polymerization, solution-polymerization, or the like, a component containing a polymer polyol such as polyethylene glycol, a non-yellowing diisocyanate such as aliphatic or alicyclic diisocyanate having no aromatic ring or another organic diisocyanate, and optionally a so-called chain extender, which is a low-molecular weight compound having two active hydrogen atoms, such as hydrazine, piperazine, hexamethylenediamine, isophoronediamine, a derivative thereof and ethylenetriamine at a predetermined ratio.

The polyurethane can be impregnated into and fixed to the web entangled sheet by impregnating an aqueous emulsion of polyurethane into the web entangled sheet, and solidifying the polyurethane by a dry method involving drying and solidification or solidifying the polyurethane by a wet method. Here, in order to cross-link the solidified polyurethane, it is also preferable to perform a curing treatment by heating the solidified and dried polyurethane.

### (5) Ultrafine fiber formation step

The island-in-the-sea composite fiber in the web entangled sheet is converted into fiber bundle-like ultrafine fibers by removing the sea component by extraction or decomposition with water, a solvent, or the like. For example, for an island-in-the-sea composite fiber using a water-soluble resin such as polyvinyl alcohol resin as the sea component, the sea component is removed by subjecting the island-in-the-sea composite fiber to hydrothermal heating with water, an aqueous alkaline solution, an aqueous acidic solution, or the like.

In the present step, ultrafine fibers are significantly crimped when the sea component is removed by dissolution from the island-in-the-sea composite fiber to form ultrafine fibers. This crimping further increase the fiber density, making it possible to obtain a non-woven fabric having a high fiber density.

The ultrafine fibers have a single-fiber fineness of preferably 0.01 to 0.5 dtex, more preferably 0.05 to 0.3 dtex, particularly preferably 0.07 to 0.1 dtex. When the fineness of the ultrafine fibers is too high, the ultrafine fibers cannot be easily thermally welded, and the slimy touch of the napped leather-like sheet tends to be reduced. The number of ultrafine fibers present to form a fiber bundle is, for example, preferably 5 to 200, more preferably 10 to 50, particularly preferably 10 to 30. As a result of the ultrafine fibers being present so as to form a fiber bundle in this way, a non-woven fabric having a high fiber density is formed.

The basis weight of the thus formed non-woven fabric containing an entangled body of fiber bundle-like ultrafine fibers is, but not particularly limited to, for example, preferably 100 to 1800 g/m², more preferably 200 to 900 g/m². The apparent density of the non-woven fabric is, but not particularly limited to, for example, preferably 0.45 g/cm³ or more, more preferably 0.45 to 0.70 g/cm³, from the view point of forming a dense non-woven fabric.

Through the steps as described above, a fiber base material including a non-woven fabric that is an entangled body of ultrafine fibers of 0.5 dtex or less and an elastic polymer can be obtained. The fiber base material thus obtained is dried, and thereafter finished by being sliced into a plurality of pieces in a direction perpendicular to the thickness direction or ground so as to adjust the thickness and the surface state. Furthermore, at least one surface of the fiber base material is napped. In napping, the surface layer of the fiber base material is napped by being buffed by using sand paper or the like, to obtain a suede-like or nubuck-like texture. In addition to napping, a finishing treatment such as a flexibilizing treatment by crumpling, a reverse seal brushing treatment, an antifouling treatment, a hydrophilization treatment, a lubricant treatment, a softener treatment, an antioxidant treatment, an ultraviolet absorber treatment, a fluorescent agent treatment and a flame retardant treatment may be performed optionally.

Preferably, the fiber base material thus obtained is further dyed. Dyeing is performed by appropriately selecting a dye composed mainly of a disperse dye, a reactive dye, an acidic dye, a metal complex dye, a sulfur dye, a sulfur vat dye or the like according to the type of fibers, and using a known dyeing machine commonly used for fiber dyeing, such as a padder, jigger, circular or wince dyeing machine. For example, when the ultrafine fibers are polyester ultrafine fibers, it is preferable to perform dyeing by high-temperature and highpressure dyeing by using a disperse dye.

The thickness of the fiber base material thus obtained is, but not particularly limited to, for example, preferably 0.3 to 3 mm, more preferably 0.5 to 2 mm, particularly preferably 0.5 to 1 mm.

Next, the napped surface is heat-embossed with an embossing mold having a projecting and recessed shape such that unnapped regions that account for 5 to 30% in area and in which ultrafine fibers are thermally welded, are formed in the napped surface of the fiber base material thus formed.

Heat embossing is performed by using, for example, an embossing roll including a plurality of projections formed as dots. More specifically, the embossing roll and a back roll are disposed so as to oppose each other with a fixed clearance maintained therebetween, and the embossing roll is heated to a temperature at which the fibers forming the non-woven fabric can be thermally welded. Then, the embossing roll and the back roll are rotated to transport the fiber base material, with the fiber base material being nipped between the embossing roll and the back roll. During such a step, a part of the napped ultrafine fibers of the fiber base material is thermally welded, to form unnapped regions.

The condition for forming the unnapped regions that account for 5 to 30% in area and in which the ultrafine fibers are thermally welded in the napped surface of the fiber base material may be appropriately selected according to the type, fineness, thickness, and the like of the fibers forming the non-woven fabric. The shape of the plurality of projections of the embossing roll is not precisely transferred in the napped surface of the fiber base material, but the degree of transfer thereof is adjusted depending on, for example, the operating condition of the embossing roll.

In the case of using a non-woven fabric that is an entangled body of ultrafine fibers having a fineness of 0.5 dtex or less and made of a modified polyethylene terephthalate having a Tg of 130°C or less, one preferable example of the operating condition of the embossing roll is such that the surface temperature of the embossing roll is set to a temperature higher than the Tg by about 10 to 60°C, and the non-woven fabric is allowed to pass at an embossing roll speed of 3 m/min and a pressure of 0.1 to 1.0 MPa.

In the case of using an embossing roll including a plurality of projections, the height difference between the projections (engraving depth) of the embossing roll is preferably 150 to 2000 µm, more preferably 500 to 1500 µm, in terms of ease of adjustment of the average nap length X of the napped region to about 100 to 400 µm.

The width of the plurality of projections of the embossing roll is, for example, preferably 100 to 1000 µm, more preferably 200 to 700 µm, in terms of ease of adjustment of an overall average length Y of the averages of the widths, orthogonal to the longitudinal direction, of the unnapped regions to about 150 to 500 µm.

Then, the heat-embossed surface in the napped surface of the fiber base material is further napped. In the napped surface of the heat-embossed fiber base material described above, ultrafine fibers other than the ultrafine fibers that have been thermally welded by being pressed by the plurality of projections of the embossing mold are also subjected to heat and laid down. In the present step, a treatment for napping such fibers that have been laid down by heat embossing is performed. As with the method described above, a method in which the surface layer of the fiber base material is napped by being buffed with sand paper or the like may be used for napping.

Then, in the case where the fiber base material has been dyed, it is preferable that a washing step is provided before or after any one of the steps performed after the dyeing step in order to increase the fastness. Note that in heat embossing as well, it is preferable that a washing step is provided in a step performed after the heat embossing step in order for the dye used for dying the ultrafine fibers to be migrated by sublimation by means of heat.

For the washing of the dyed fiber base material, it is possible to use a reduction cleaning method that is usually performed to dye polyester fibers. Specific examples thereof include a method in which any excess dye in the artificial leather is removed by cleaning by reductive decomposition in the presence of an alkaline agent at a temperature of 50 to 80°C by using a reducing agent and an auxiliary reducing agent. Examples of the reducing agent include reducing agents commonly used for reduction cleaning of polyester, such as thiourea dioxide and hydrosulfite. Then, it is preferable that washing is performed to such a degree that the color fastness to water is preferably grade 4 or higher, more preferably grade 4 to 5 or higher, in a dyeing fastness (to water) test in accordance with JIS L 0846, because the migration of the dye during use is sufficiently suppressed. Note, however, that when washing is performed such that the color fastness to water becomes grade 4 or higher, the dye in the elastic polymer is substantially entirely lost. In such a case, if the elastic polymer is present on the surface, a significant color difference occurs between the color of the dyed ultrafine fibers and the color of the elastic polymer, so that a color difference occurs between the napped region and the unnapped regions, resulting in a non-uniform appearance. In the napped leather-like sheet of the present embodiment, the ultrafine fibers appearing on the surface are not fixed with the elastic polymer, so that the elastic polymer is less likely to be exposed on the surface. Accordingly, even after washing is performed such that the color fastness to water becomes grade 4 or higher after dyeing with a disperse dye, a color difference is less likely to occur between the napped region and the unnapped region.

In the napped leather-like sheet obtained in the present embodiment, it is preferable that when the surface is observed with an SEM at 30X, the elastic polymer is not attached to the napped ultrafine fibers and the thermally welded and laid down ultrafine fibers, and the elastic polymer is not substantially exposed on the surface. This is preferable since a tactile impression having a moist and slimy touch with a low coarse tactile impression can be obtained, and in the case where the fiber base material has been dyed, a color difference is less likely to occur between the napped region and the unnapped regions.

In the napped leather-like sheet of the present embodiment, as described above, the area ratio of the unnapped regions in the surface including the napped region and the unnapped regions is 5 to 30%, and Y/X is adjusted to be 0.5 to 1.5. This adjustment is performed, for example, in the following manner in the above-described steps. For example, the area ratio of the unnapped regions is significantly affected by the surface area of the projections of the embossing mold if the surface of the projections is accurately transferred to the fiber base material, and the area ratio of the unnapped regions formed also varies depending on the embossing condition. Specifically, the higher the temperature and the pressing pressure of the embossing condition become, the higher the area ratio of the unnapped regions will be. The average nap length X is adjusted according to the napping condition and the heat embossing condition. Specifically, the average nap length tends to be longer when the grit number of the sand paper used in napping is decreased, when the treatment is performed at a low rotational speed, and when the treatment is performed at a low temperature and a low pressure in heat embossing. The overall average length Y of the averages of the widths, orthogonal to the longitudinal direction, of the unnapped regions tends to be larger as the width of the projections of the embossing mold is increased, and also tends to be larger when the treatment is performed at a high temperature and a high pressure in heat embossing.

### [Examples]

Hereinafter, the present invention will be described more specifically by way of examples. It should be appreciated that the present invention is by no means limited by the examples.

### [Example 1]

Ethylene-modified polyvinyl alcohol as a thermoplastic resin serving as a sea component and an isophthalic acid-modified polyethylene terephthalate (with an isophthalic acid unit content of 6.0 mol%) having a Tg of 110°C as a thermoplastic resin serving as an island component were molten separately. Then, each of the molten resins was supplied to a multicomponent fiber spinning spinneret having multiple nozzle holes disposed in parallel, so as to form a cross section on which 25 island component portions having a uniform cross-sectional area were distributed in the sea component. At this time, the molten resins were supplied while adjusting the pressure such that the mass ratio between the sea component and the island component satisfies Sea component/Island component = 25/75. Then, the molten fibers were discharged from the nozzle holes set at a spinneret temperature of 260°C.

Then, the molten fibers discharged from the nozzle holes were drawn by suction by using an air jet nozzle suction apparatus with an air stream pressure regulated so as to provide an average spinning speed of 3700 m/min, and thereby to spin island-in-the-sear composite filaments with an average fineness of 2.1 dtex. The spun island-in-the-sear composite filaments were continuously piled on a movable net while being suctioned from the back side of the net. The piled amount was regulated by regulating the movement speed of the net. Then, in order to suppress the fuzzing of the napped fibers on the surface, the island-in-the-sear composite filaments piled on the net were softly pressed with a metal roll at 42°C. Then, the island-in-the-sear composite filaments were removed from the net, and allowed to pass between a grid-patterned metal roll having a surface temperature of 75°C and a back roll, thereby hot pressing the fibers. In this manner, a filament web having a basis weight of 34 g/m² and in which the fibers on the surface were temporarily welded in a grid pattern was obtained.

Next, an oil solution mixed with an antistatic agent was sprayed to the surface of the obtained filament web, and thereafter, 10 sheets of the filament web were stacked by using a cross lapper apparatus to form a superposed web with a total basis weight of 340 g/m2, and an oil solution for preventing the needle from breaking was further sprayed thereto. Then, the superposed web was needle-punched, thereby performing a three-dimensional entangling treatment. Specifically, the stacked body was needle-punched at a density of 3300 punch/cm² alternately from both sides at a punching depth of 8.3 mm by using 6-barb needles with a distance from the needle tip to the first barb of 3.2 mm. The area shrinkage by the needle punching was 68%, and the basis weight of the entangled web after the needle punching was 415 g/m².

The obtained entangled web was densified by being subjected to a heat-moisture shrinking treatment in the following manner. Specifically, water at 18°C was uniformly sprayed in an amount of 10 mass% to the entangled web, and the entangled web was heated by being stood still in an atmosphere with a temperature of 70°C and a relative humidity of 95% for 3 minutes with no tension applied, thereby heat-moist shrinking the entangled web so as to increase the apparent fiber density. The area shrinkage by the heat-moisture shrinking treatment was 45%, and the densified entangled web had a basis weight of 750 g/m² and an apparent density of 0.52 g/cm³. Then, for further densification, the entangled web was pressed with a dry-heat roll, thereby adjusting the apparent density to 0.60 g/cm³.

Next, a polyurethane emulsion was impregnated into the densified entangled web in the following manner. An aqueous polyurethane emulsion (solid content concentration: 13%) composed mainly of polycarbonate/ether polyurethane was impregnated into the densified entangled web. Then, water in the entangled web was dried in a drying furnace at 150°C, and the polyurethane was crosslinked. In this manner, a polyurethane entangled web composite having a mass ratio between polyurethane and the entangled web of 7/93 was formed.

Next, the polyurethane entangled web composite was immersed in hot water at 95°C for 20 minutes to remove the sea component contained in the island-in-the-sear composite filaments by extraction, and then was dried in a drying furnace at 120°C, thereby obtaining a fiber base material having a thickness of about 1.0 mm.

The obtained fiber base material had an apparent density of 0.58 g/cm³, and a mass ratio between the non-woven fabric and polyurethane of 91/9. The fineness of the ultrafine fibers forming the non-woven fabric was 0.08 dtex.

Then, the obtained fiber base material was divided into two in the thickness direction, and grounded to 0.45 mm. Then, the surface side of the fiber base material was napped with sand paper having a grit number of 400, to obtain a nap-finished surface. Then, the napped fiber base material was jet-dyed with a brown disperse dye at 130°C for one hour, and reduction and neutralization were performed.

Next, the napped surface of the dyed fiber base material was embossed by using an embossing roll having a pattern with shallow wrinkle along the pores of natural leather. The width of the projection portions of the embossing roll was 220 µm, the engraving depth was 750 µm, and the area ratio of the projection portions was 13%. The embossing was performed under the following conditions: a surface temperature of the embossing roll of 140°C, a pressure of 0.3 MPa, and an embossing roll speed of 1.5 m/min.

Then, the heat-embossed fiber base material was soaped in a dyeing machine, and washed until the color fastness to water became grade 4 or higher in a color fastness test in accordance with JIS L 0846. Then, the fiber base material was dried, and thereafter further napped by buffing the surface with sand paper having a grit number of 600. In this manner, a napped leather-like sheet was obtained. FIG. 1 is a scanning electron microscope (SEM) photographed image of the surface of the obtained napped leather-like sheet. FIG. 2 is an SEM photographed image of a cross section in the thickness direction. As shown in FIG. 1, polyurethane was not exposed on the surface.

Then, the obtained napped leather-like sheet was evaluated in the following manner.

### (Ratio of unnapped regions, average area of unnapped regions)

The napped fibers of the obtained napped leather-like sheet were oriented in the nap direction by using a lint brush. Then, a photograph of the surface of the napped leather-like sheet with the napped fibers having been oriented was taken with a scanning electron microscope (SEM) at a magnification of 30X. The field of view at this time was 3.0 mm in height × 4.3 mm in width. Then, the obtained photograph was enlarged into A4 size, and a boundary line was drawn between the region of the napped ultrafine fibers and each of the unnapped regions that had been embossed and flattened. Then, the napped region and the unnapped regions were separated along the boundary lines, the weight of the photograph piece of each of the regions was measured, and the area ratio of the unnapped regions was calculated. The area ratio was calculated for four photographs, and an average value thereof was determined as the area ratio of the unnapped regions. In addition, the area of all unnapped regions in the four photographs was divided by the number of all unnapped regions, to calculate an average area of the unnapped regions.

### (Overall average length Y of averages of widths, orthogonal to longitudinal direction, of unnapped regions)

The napped fibers of the obtained napped leather-like sheet were oriented in the nap direction by using a lint brush. Then, a photograph of the surface of the napped leather-like sheet with the napped fibers having been oriented was taken with a scanning electron microscope (SEM) at a magnification of 30X. The field of view at this time was 3.0 mm in height × 4.3 mm in width. Then, the obtained photograph was enlarged into A4 size. Then, as shown in FIG. 4, a boundary line was drawn between each of the unnapped regions and the napped region including the napped ultrafine fibers on the entire area of the photograph. Then, a line A was drawn on one unnapped region in a longitudinal direction, in which the unnapped region was the longest. Furthermore, a line B orthogonal to the center of the line A was drawn, then a plurality of lines Bn (B₁, B₂, B₃, ...) parallel to the line B were drawn from the line B at an interval of 200 µm, and an average value of the lengths thereof was determined. The average value was determined for 50 different unnapped regions included in the four photographs, and the average values were further averaged, thereby to calculate an overall average length Y of averages of the widths, orthogonal to the longitudinal direction, of the unnapped regions.

### (Nap length)

The napped fibers of the obtained napped leather-like sheet were oriented against the nap direction by using a lint brush. Then, a photograph of a cross section, in the thickness direction, of the napped leather-like sheet with the napped fibers having been oriented was taken with an SEM at a magnification of 80X. The field of view at this time was 1.1 mm in height × 1.6 mm in width. Then, the obtained photograph was enlarged into A4 size. Then, as shown in FIG. 5, a line L was drawn on the upper boundary of the bundles of the ultrafine fibers present in the non-woven fabric. In addition, a line U was drawn on the upper boundary of the front-most fibers napped on the observed surface. Then, a plurality of lines Pn (P₁, P₂, P₃, ... P₉) parallel to the thickness were drawn at an interval of 200 µm. Then, the lengths of the line segments from L to U on the lines Pn were measured, and the measured lengths were averaged. Then, the lengths of the line segments on the nine different lines Pn were determined, and an average value thereof was determined. This measurement was performed at four locations selected evenly across the napped leather-like sheet, and the average values were further averaged, thereby to calculate an average nap length (µm) X of the napped ultrafine fibers.

### (Tactile impression)

The tactile impression of the surface was checked by ten subjects engaged in the production of artificial leather, and a difference in tactile impression from a general nubuck leather was determined by majority voting in accordance with the following determination criteria.
A: Highly slimy touch closer to that of nubuck leather was obtained.
B: Slightly dry tactile impression was obtained, but a slimy touch closer to that of nubuck leather was also obtained.
C: A tactile impression clearly drier than that of nubuck leather, or a coarse feel was obtained.

### (Appearance)

The appearance impression on the surface was checked by ten subjects engaged in the production of artificial leather, and a difference in color tone on the surface was determined by majority voting in accordance with the following determination criteria.
A: The surface was dyed with a uniform color.
B: Regions with different colors were evidently present on the surface.

### (Design quality)

The embossed artificial leather was treated in a circular dyeing machine at 70°C× for one hour, and the clarity of the embossed pattern after the treatment was determined by ten subjects engaged in the production of artificial leather in accordance with the following criteria.
A: An embossed pattern with high design quality remained.
B: An embossed pattern that was unclear, but had a design quality was observable.
C: No embossed pattern was observable.

The results are shown in Table 1.

**[Table 1]**

| Example No. | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| Type of ultrafine fibers | Mod. PET | Mod. PET | Mod. PET | Mod. PET | Mod. PET | Mod. PET | Mod. PET | PA6 |
| Fineness of ultrafine fibers (dtex) | 0.08 | 0.08 | 0.08 | 0.08 | 0.08 | 0.08 | 0.08 | 0.08 |
| Tg of ultrafine fibers (°C) | 110 | 110 | 110 | 110 | 110 | 110 | 110 | 47 |
| Projection width of embossing roll (µm) | 220 | 220 | 340 | 340 | - | 550 | 100 | 220 |
| Projection area ratio of embossing roll (%) | 13 | 13 | 35 | 35 | - | 50 | 7 | 13 |
| Engraving depth of embossing roll (µm) | 750 | 750 | 920 | 920 | - | 1250 | 280 | 750 |
| Surface temperature of embossing roll (°C) | 140 | 160 | 130 | 155 | - | 165 | 140 | 140 |
| Pressing pressure of embossing roll (MPa) | 0.3 | 0.3 | 0.3 | 0.3 | - | 0.3 | 0.3 | 0.3 |
| Speed of embossing roll (m/min) | 1.5 | 1.5 | 1.5 | 1.5 | - | 1.5 | 1.5 | 1.5 |
| Ratio of unnapped regions (%) | 5 | 11 | 19 | 28 | 0 | 40 | 10 | 8 |
| Average area of unnapped regions (mm²) | 0.12 | 0.13 | 0.16 | 0.19 | - | 0.29 | 0.07 | 0.15 |
| Average nap length X of napped regions (µm) | 350 | 330 | 390 | 330 | 420 | 330 | 360 | 180 |
| Overall average length Y of unnapped regions (µm) | 250 | 280 | 370 | 440 | - | 620 | 120 | 290 |
| Y/X | 0.71 | 0.85 | 0.95 | 1.33 | - | 1.9 | 0.3 | 1.6 |
| Exposed polyurethane on surface | None | None | None | None | None | None | None | None |
| Tactile impression | A | A | A | B | A | C | A | C |
| Appearance | A | A | A | A | A | A | A | B |
| Design quality | B | A | B | A | - | A | C | A |

### [Example 2]

A napped leather-like sheet was obtained in the same manner as in Example 1 except that a surface as given in Table 1 was formed by changing the embossing conditions used in Example 1 to the following conditions. Then, the obtained napped leather-like sheet was evaluated in the same manner. The results are shown in Table 1.

### <Embossing conditions>

The napped surface of the fiber base material was embossed by using the same embossing roll as that used in Example 1. The embossing was performed under the following conditions: a surface temperature of the embossing roll of 160°C, a pressure of 0.3 MPa, and an embossing roll speed of 1.5 m/min.

### [Example 3]

A napped leather-like sheet was obtained in the same manner as in Example 1 except that a surface as given in Table 1 was formed by changing the embossing conditions used in Example 1 to the following conditions. Then, the obtained napped leather-like sheet was evaluated in the same manner. The results are shown in Table 1.

### <Embossing conditions>

The napped surface of the fiber base material was embossed by using an embossing roll having a pattern with slightly deep wrinkle along the pores of natural leather. The width of the projection portions of the embossing roll was 340 µm, the engraving depth was 920 µm, and the area ratio of the projection portions was 35%. The embossing was performed under the following conditions: a surface temperature of the embossing roll of 130°C, a pressure of 0.3 MPa, and an embossing roll speed of 1.5 m/min.

### [Example 4]

A napped leather-like sheet was obtained in the same manner as in Example 1 except that a surface as given in Table 1 was formed by changing the embossing conditions used in Example 1 to the following conditions. Then, the obtained napped leather-like sheet was evaluated in the same manner. The results are shown in Table 1.

### <Embossing conditions>

The napped surface of the fiber base material was embossed by using the same embossing roll as that used in Example 3. The embossing was performed under the following conditions: a surface temperature of the embossing roll of 155°C, a pressure of 0.3 MPa, and an embossing roll speed of 1.5 m/min.

### [Comparative example 1]

A napped leather-like sheet was obtained in the same manner as in Example 1 except that the unnapped regions were not formed by omitting the steps after embossing in Example 1. Then, the obtained napped leather-like sheet was evaluated in the same manner. The results are shown in Table 1.

### [Comparative example 2]

A napped leather-like sheet was obtained in the same manner as in Example 1 except that a surface as given in Table 1 was formed by changing the embossing conditions used in Example 1 to the following conditions. Then, the obtained napped leather-like sheet was evaluated in the same manner. The results are shown in Table 1.

### <Embossing conditions>

The napped surface of the fiber base material was embossed by using an embossing roll having a pattern with deep wrinkle along the pores of natural leather. The width of the projection portions of the embossing roll was 550 µm, the engraving depth was 1250 µm, and the area ratio of the projection portion was 50%. The embossing was performed under the following conditions: a surface temperature of the embossing roll of 165°C, a pressure of 0.3 MPa, and an embossing roll speed of 1.5 m/min.

### [Comparative example 3]

A napped leather-like sheet was obtained in the same manner as in Example 1 except that a surface as given in Table 1 was formed by changing the embossing conditions used in Example 1 to the following conditions. Then, the obtained napped leather-like sheet was evaluated in the same manner. The results are shown in Table 1.

### <Embossing conditions>

The napped surface of an intermediate sheet of the fiber base material was embossed by using an embossing roll having a pattern with deep wrinkle along the pores of natural leather. The width of the projection portions of the embossing roll was 100 µm, the engraving depth was 280 µm, and the area ratio of the projection portion was 7%. The embossing was performed under the following conditions: a surface temperature of the embossing roll of 140°C, a pressure of 0.3 MPa, and an embossing roll speed of 1.5 m/min.

### [Comparative example 4]

A sheet was obtained in the same manner as in Example 1 except that a polyamide 6 having a Tg of 47°C as the thermoplastic resin serving as the island component was used in place of the isophthalic acid-modified polyethylene terephthalate used in Example 1, having a Tg of 110°C as the thermoplastic resin serving as the island component, and the fiber base material was died with a metal complexed dye in place of the fiber disperse dye. Then, the obtained sheet was evaluated in the same manner. The results are shown in Table 1.

As can be seen from the results shown in Table 1, all of the napped leather-like sheets obtained in Examples 1 to 4 according to the present invention had a low dry feel or coarse feel. They also had excellent durability of the fixation of the unnapped regions. On the other hand, the napped leather-like sheet of Comparative example 2, for which Y/X was 1.9, had a highly dry feel or coarse feel. The embossed portion of the napped leather-like sheet of Comparative example 3, for which Y/X was 0.3, was covered with the napped fibers, and was not observable.

### [Industrial Applicability]

A napped leather-like sheet obtained by the present invention can be suitably used as a napped leather-like sheet used in applications such as the surface materials of clothing, shoes, furniture and the like, as well as the interior materials of vehicles, aircrafts and the like.

### [Reference Signs List]

1 ... Non-woven fabric
1a ... Ultrafine fiber
2 ... Elastic polymer
R1 ... Napped region
R2 ... Unnapped region

## Claims

1. A napped leather-like sheet comprising
a fiber base material including a non-woven fabric that is an entangled body of ultrafine fibers of 0.5 dtex or less and an elastic polymer applied to the non-woven fabric,
wherein the napped leather-like sheet has a surface including a napped region including the ultrafine fibers that have been napped, and a plurality of unnapped regions including the ultrafine fibers that have been thermally welded and laid down, the unnapped regions being surrounded by the napped region,
a total area of the unnapped regions accounts for 5 to 30% of an area of the surface, and
Y/X is 0.5 to 1.5, where X represents an average nap length (µm) of the napped ultrafine fibers and Y represents an overall average length (µm) of averages of widths, orthogonal to a longitudinal direction, of the unnapped regions , determined according to the method in the description.

2. The napped leather-like sheet according to claim 1, wherein
the elastic polymer is not attached to the napped ultrafine fibers and the thermally welded and laid down ultrafine fibers when the surface is observed with a scanning electron microscope at a magnification of 30X.

3. The napped leather-like sheet according to claim 1 or 2, wherein
the average nap length X is 100 to 400 µm.

4. The napped leather-like sheet according to any one of claims 1 to 3, wherein
the overall average length (µm) Y is 150 to 500 µm.

5. The napped leather-like sheet according to any one of claims 1 to 4, wherein
the plurality of unnapped regions have an average area of 0.11 to 0.17 mm².

6. The napped leather-like sheet according to any one of claims 1 to 5, wherein
the ultrafine fibers contain an isophthalic acid-modified polyethylene terephthalate having a glass transition temperature of 100 to 120°C.

7. The napped leather-like sheet according to any one of claims 1 to 6, wherein
the napped leather-like sheet has a water fastness of grade 4 or higher in a color fastness test in accordance with JIS L 0846, and
the ultrafine fibers are dyed with a disperse dye.

8. A method for producing the napped leather-like sheet according to claim 1, comprising the steps of:
providing a fiber base material including a nonwoven fabric that is an entangled body of ultrafine fibers of 0.5 dtex or less and an elastic polymer applied to the nonwoven fabric;
napping at least one surface of the fiber base material;
dyeing the napped fiber base material with a disperse dye;
heat embossing the napped surface by using an embossing mold having a projecting and recessed shape such that unnapped regions that account for 5 to 30% in area and in which the ultrafine fibers have been thermally welded are formed in the napped surface of the dyed fiber base material;
further napping the heat-embossed surface; and
washing performed before or after any one of the steps after the dyeing, wherein
Y/X is adjusted to 0.5 to 1.5, where X represents an average nap length (µm) of the napped ultrafine fibers and Y represents an overall average length (µm) of averages of widths, orthogonal to a longitudinal direction, of the unnapped regions, determined according to the method in the description.

## Patentansprüche

1. Eine raulederartige Bahn, umfassend
einen Faser-Grundstoff einschließlich eines Vliesstoffes, welcher ein verwickelter Körper aus ultrafeinen Faser von 0,5 dtex oder weniger ist, und eines elastischen Polymers, welches auf den Vliesstoff aufgebracht ist,
wobei die raulederartige Bahn eine Oberfläche einschließlich eines aufgerauten Bereichs, welcher die ultrafeinen Fasern beinhaltet, die aufgeraut wurden, und mehrere nicht aufgeraute Bereiche einschließlich der ultrafeinen Fasern, die thermisch verschweißt und abgelegt wurden, wobei die nicht aufgerauten Bereiche von dem aufgerauten Bereich umgeben sind, aufweist,
eine Gesamtfläche der nicht aufgerauten Bereiche 5 bis 30% einer Fläche der Oberfläche ausmacht und
Y/X 0,5 bis 1,5 beträgt, wobei X eine durchschnittliche Raulänge (µm) der aufgerauten ultrafeinen Fasern darstellt und Y eine durchschnittliche Gesamtlänge (µm) der Mittelwerte der Breiten, orthogonal zu einer Längsrichtung, der nicht aufgerauten Bereiche darstellt, bestimmt gemäß dem Verfahren in der Beschreibung.

2. Die raulederartige Bahn gemäß Anspruch 1, wobei
das elastische Polymer nicht an die aufgerauten ultrafeinen Fasern und die thermisch verschweißten und abgelegten ultrafeinen Fasern gebunden ist, wenn die Oberfläche mit einem Rasterelektronenmikroskop bei einer Vergrößerung von 30X betrachtet wird.

3. Die raulederartige Bahn gemäß Anspruch 1 oder 2, wobei
die durchschnittliche Raulänge X 100 bis 400 µm beträgt.

4. Die raulederartige Bahn gemäß einem der Ansprüche 1 bis 3, wobei
die durchschnittliche Gesamtlänge (µm) Y150 bis 500 µm beträgt.

5. Die raulederartige Bahn gemäß einem der Ansprüche 1 bis 4, wobei
die Mehrzahl der nicht aufgerauten Bereiche eine durchschnittliche Fläche von 0,11 bis 0,17 mm² aufweisen.

6. Die raulederartige Bahn gemäß einem der Ansprüche 1 bis 5, wobei
die ultrafeinen Fasern ein Isophthalsäure-modifiziertes Polyethylenterephthalat mit einer Glasübergangstemperatur von 100 bis 120°C enthalten.

7. Die raulederartige Bahn gemäß einem der Ansprüche 1 bis 6, wobei
die raulederartige Bahn eine Wasserbeständigkeit von Grad 4 oder höher in einer Farbechtheitsprüfung gemäß JIS L 0846 aufweist und
die ultrafeinen Fasern mit einem Dispersionsfarbstoff gefärbt werden.

8. Ein Verfahren zur Herstellung der raulederartigen Bahn gemäß Anspruch 1, umfassend die Schritte:
Bereitstellen eines Faser-Grundstoffs einschließlich eines Vliesstoffes, welcher ein verwickelter Körper aus ultrafeinen Faser von 0,5 dtex oder weniger ist, und eines elastischen Polymers, welches auf den Vliesstoff aufgebracht ist;
Aufrauen von mindestens einer Oberfläche des Faser-Grundstoffes;
Färben des aufgerauten Faser-Grundstoffes mit einem Dispersionsfarbstoff;
Wärmeprägen der aufgerauten Oberfläche unter Verwendung einer Prägeform, welche eine vorstehende und vertiefte Form aufweist, so dass nicht aufgeraute Bereiche, die 5 bis 30 % der Fläche ausmachen und in welchen die ultrafeinen Fasern thermisch verschweißt wurden, in der aufgerauten Oberfläche des gefärbten Faser-Grundstoffes gebildet werden;
weiteres Aufrauen der wärmegeprägten Oberfläche; und
Waschen, das vor oder nach jedem der Schritte nach dem Färben durchgeführt wird, wobei
Y/X auf 0,5 bis 1,5 eingestellt wird, wobei X eine durchschnittliche Raulänge (µm) der aufgerauten ultrafeinen Fasern darstellt und Y eine durchschnittliche Gesamtlänge (µm) der Mittelwerte der Breiten, orthogonal zu einer Längsrichtung, der nicht aufgerauten Bereiche darstellt, bestimmt gemäß dem Verfahren in der Beschreibung.

## Revendications

1. Feuille en similicuir gratté comprenant
un matériau de base fibreux comportant un tissu non-tissé qui est un corps enchevêtré de fibres ultrafines de 0,5 dtex ou moins et un polymère élastique appliqué sur le tissu non tissé,
dans laquelle la feuille en similicuir gratté possède une surface comportant une région grattée comportant les fibres ultrafines qui ont été grattées, et une pluralité de régions non-grattées comportant les fibres ultrafines qui ont été soudées thermiquement et déposées, les régions non-grattées étant entourées par la région grattée,
une aire totale des régions non grattées compte pour 5 à 30 % d'une aire de la surface, et
Y/X va de 0,5 à 1,5, où X représente une longueur de grattage moyenne (µm) des fibres ultrafines grattées et Y représente une longueur moyenne globale (µm) de moyennes de largeurs, orthogonales à une direction longitudinale, des régions non-grattées, déterminées selon le procédé de la description.

2. Feuille en similicuir gratté selon la revendication 1, dans laquelle
le polymère élastique n'est pas attaché aux fibres ultrafines grattées ni aux fibres ultrafines thermiquement soudées et déposées lorsque la surface est observée avec un microscope électronique à balayage à un grossissement de 30 fois.

3. Feuille en similicuir gratté selon la revendication 1 ou 2, dans laquelle
la longueur de grattage moyenne X va de 100 à 400 µm.

4. Feuille en similicuir gratté selon l'une quelconque des revendications 1 à 3, dans laquelle
la longueur moyenne globale (µm) Y va de 150 à 500 µm.

5. Feuille en similicuir gratté selon l'une quelconque des revendications 1 à 4, dans laquelle
la pluralité de régions non-grattées possèdent une aire moyenne de 0,11 à 0,17 mm².

6. Feuille en similicuir gratté selon l'une quelconque des revendications 1 à 5, dans laquelle
les fibres ultrafines contiennent un poly(téréphtalate d'éthylène) modifié par acide isophtalique ayant une température de transition vitreuse de 100 à 120 °C.

7. Feuille en similicuir gratté selon l'une quelconque des revendications 1 à 6, dans laquelle
la feuille en similicuir gratté possède une résistance à l'eau de grade 4 ou supérieur dans un test de résistance de couleur conformément à la norme JIS L 0846, et
les fibres ultrafines sont teintes avec une teinture dispersée.

8. Procédé pour la production de la feuille en similicuir gratté selon la revendication 1, comprenant les étapes suivantes :
la fourniture d'un matériau de base fibreux comportant un tissu non-tissé qui est un corps enchevêtré de fibres ultrafines de 0,5 dtex ou moins et un polymère élastique appliqué sur le tissu non-tissé ;
le grattage d'au moins une surface du matériau de base fibreux ;
la teinture du matériau de base fibreux gratté avec une teinture dispersée ;
le gaufrage à chaud de la surface grattée en utilisant un moule de gaufrage ayant une géométrie saillante et en retrait de sorte que des régions non-grattées, qui comptent pour 5 à 30 % de l'aire et dans lesquelles les fibres ultrafines ont été soudées thermiquement, sont formées dans la surface grattée du matériau de base fibreux teinté ;
le grattage supplémentaire de la surface gaufrée à chaud ; et
le lavage réalisé avant ou après l'une quelconque des étapes après la teinture, dans lequel
Y/X est ajusté sur 0,5 à 1,5, où X représente une longueur de grattage moyenne (µm) des fibres ultrafines grattées et Y représente une longueur moyenne globale (µm) de moyennes de largeurs, orthogonales à une direction longitudinale, des régions non-grattées, déterminées selon le procédé de la description.
